# EUROPEAN PATENT APPLICATION

(11) **EP 2 557 500 A2**
(43) Date of publication of application: **13.02.2013**
(21) Application number: 12179399.6
(22) Date of filing: 06.08.2012
(51) Int. Cl.: G06F 9/45, G06F 9/46, G06F 9/50

(54) **Embedded multi-processor parallel processing system and operating method for same**

(30) Priority: 11.08.2011 CN 201110229856
(71) Applicant: SIEMENS AKTIENGESELLSCHAFT, 80333 München (DE)
(72) Inventor: Jie, Ming, 102208 Beijing (CN); Long, Fei, 100102 Beijing (CN); Pan, Li, 100102 Beijing (CN)

(57) **Abstract**

The present invention provides an embedded multi-processor parallel processing system, comprising: a compilation unit, an operational support unit and at least two processing units. Also disclosed is an operating method for the above embedded multi-processor parallel processing system. By way of the embedded multi-processor parallel processing system and system operating method provided in the present invention, parallel processing by multiple processing units on an embedded hardware platform can be realized.

## Description

### Technical field

The present invention relates to the field of automatic control, in particular to an embedded multi-processor parallel processing system and an operating method for the same

### Background art

Automatic control systems are generally used to process automated tasks within a certain range. When the tasks to be processed by an automatic control system exceed the capacity and processing capability of the system, it is necessary to update the system, that is to say, upgrade the system's capacity, processing capability and performance, in order to attain a level at which the system demands can be satisfied. The traditional way of updating an automatic control system is to replace the original system with a higher-grade system with a larger capacity and better processing capability, and thereby meet the requirements of system update. Such an update relying on substitution will be accompanied by problems of high cost and complicated operation.

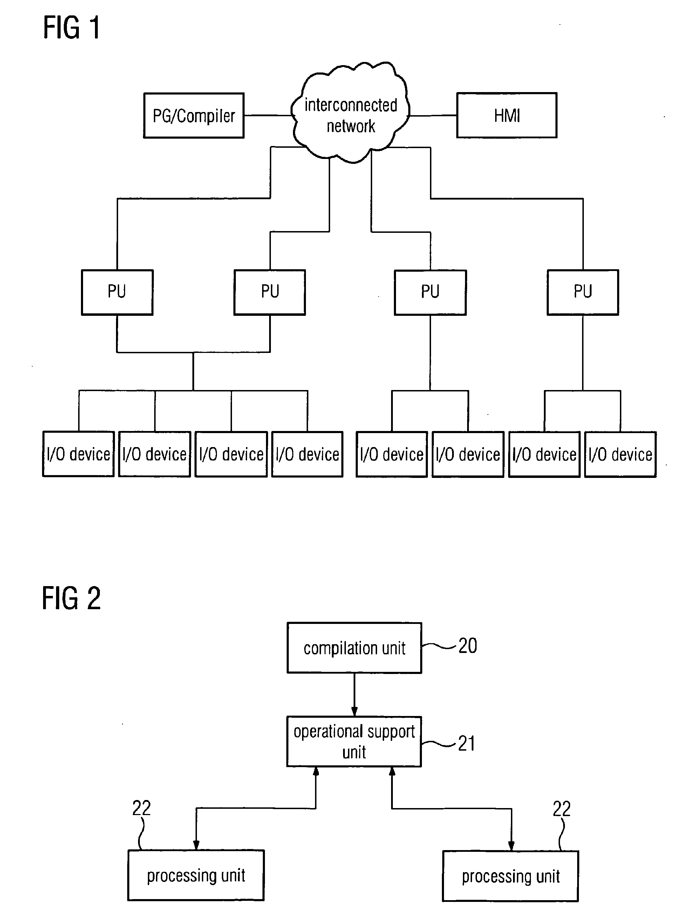

Fig. 1 is a structural schematic diagram of a multi-processor parallel control system (Multi-Processor Parallel Controlling System, MPPCS); an MPPCS can execute multiple program instructions and data simultaneously on multiple processors to obtain a faster operating result. The multi-processor parallel control system shown in Fig. 1 comprises N processing units (abbreviated as PU, Process Unit or referred to as a unit controller) from processing unit 1 to processing unit N, one compiler (for example HMI or PG/Compiler), and an interconnected network connected to the N processing units and the compiler. The N processing units are for executing in parallel the programs to be executed by the automatic control system, in other words, each processing unit executes part of the programs to be executed by the automatic control system. The compiler is connected to the N processing units via the interconnected network, and is used to convert a serial automatic control program described in engineering language into parallel code executed on multiple processing units simultaneously, thereby ensuring that the processing units are able to execute parallel tasks. The N processing units are connected via the interconnected network, with the result that information on one processing unit can be transferred to another processing unit via the interconnected network. Compared to the method of upgrade by substitution, since a multi-processor parallel control system only requires the addition of new modules or equipment, taking the original system as a basis, upgrade can be carried out more quickly and easily on the one hand, while expenditure and the cost of upgrading the system are reduced on the other.

However, since different embedded hardware platforms (such as ARM or MIPS) have different instruction sets, it is difficult to set up a universal software operating platform for embedded hardware platforms; although the Java virtual machine can provide a universal software operating platform for different hardware platforms, the excessively large size of the Java virtual machine and the relatively low execution efficiency thereof mean that it is not suited for use with embedded hardware platforms, thus at the present time there is no MPPCS applicable to embedded hardware platforms.

### Content of the invention

In order to ameliorate the problem in the prior art, the present invention proposes an embedded multi-processor parallel processing system, for realizing parallel processing by multiple processing units on an embedded hardware platform.

The embedded multi-processor parallel processing system proposed by the present invention comprises:
a compilation unit, for generating a plurality of automatic control subroutines according to an automatic control program, and compiling each of the automatic control subroutines into intermediate code;
an operational support unit, for acquiring the intermediate code of each of the automatic control subroutines from the compilation unit and converting the intermediate code of each of the automatic control subroutines to tasks to be run in an embedded operating system, and for identifying each processing unit and sending each of the tasks to the corresponding processing unit;
at least two processing units, for receiving and running the tasks obtained through conversion of the intermediate code of the automatic control subroutines and sent by the operational support unit, and capable of carrying out data communication with each other while running the tasks corresponding to the automatic control subroutines.

According to the above system provided by an embodiment of the present invention, a multi-processor parallel processing system can be realized on an embedded hardware platform by having a compilation unit generate a plurality of automatic control subroutines according to an automatic control program and then convert each automatic control subroutine to intermediate code, after which an operational support unit converts the intermediate code to tasks to be run in an embedded operating system and sends the same to corresponding processing units, with the processing units carrying out data interaction with each other while running their respective tasks; the processing efficiency is improved, and new functions can be added when necessary simply by adding corresponding processing units.

The operational support unit is further used to control the at least two processing units to synchronously execute each task obtained through conversion of the intermediate code of each automatic control subroutine.

The automatic control program processed by the compilation unit is at least any one of a structured text language program, a ladder diagram language program, and a function block diagram language program.

The operational support unit is used to carry out data communication based on the communication protocol adopted by the operational support unit when at least two processing units are running tasks corresponding to automatic control subroutines;
the communication protocol adopted by the operational support unit comprises at least one of network protocol or data transmission protocol.

The compilation unit comprises a parallelization sub-unit and a compilation sub-unit, wherein
the parallelization sub-unit is for dividing the automatic control program into segments and generating a symbol table, syntax tree and control flow graph on the basis of semantic analysis, and generating a plurality of automatic control subroutines after determining the dependence relationships among the automatic control program segments;
the compilation sub-unit is for compiling each automatic control subroutine into intermediate code.

The compilation unit further comprises a pre-processing sub-unit, for outputting the automatic control program into an awl format file.

An operating method for an embedded multi-processor parallel control system proposed by the present invention comprises:
a compilation unit generating a plurality of automatic control subroutines according to an automatic control program, and compiling each of the automatic control subroutines into intermediate code;
an operational support unit acquiring the intermediate code of each of the automatic control subroutines and converting the intermediate code of each of the automatic control subroutines to tasks to be run in an embedded operating system, and after identifying each processing unit, sending each of the tasks to the corresponding processing unit;
at least two processing units separately receiving the tasks sent by the operational support unit which correspond to the automatic control subroutines and running the same, and carrying out data communication with each other during running.

According to the above operating method provided by an embodiment of the present invention, operation of a multi-processor parallel processing system can be realized on an embedded hardware platform by having a compilation unit generate a plurality of automatic control subroutines according to an automatic control program and then convert each automatic control subroutine to intermediate code, after which an operational support unit converts the intermediate code to tasks to be run in an embedded operating system and sends the same to corresponding processing units, with the processing units carrying out data interaction while running each of the tasks; the processing efficiency is improved, and new functions can be added when necessary simply by adding corresponding processing units.

When the at least two processing units run the tasks corresponding to the automatic control subroutines, the operational support unit controls the at least two processing units to synchronously execute each task obtained through conversion of the intermediate code of each automatic control subroutine.

The automatic control program is at least any one of a structured text language program, a ladder diagram language program, and a function block diagram language program.

The processing units carry out data communication with each other based on the communication protocol adopted by the operational support unit;
the communication protocol adopted by the operational support unit comprises at least one of network protocol or data transmission protocol.

The step of generating a plurality of automatic control subroutines according to an automatic control program comprises:
dividing the automatic control program into segments and generating a symbol table, syntax tree and control flow graph on the basis of semantic analysis, and generating a plurality of automatic control subroutines after determining the dependence relationships among the automatic control program segments.

Before a plurality of automatic control subroutines are generated according to an automatic control program, the automatic control program is outputted into an awl format file.

### Description of the accompanying drawings

Preferable embodiments of the present invention will be described in detail below with reference to the accompanying drawings, so that those skilled in the art may have a clearer understanding of the above and other features and advantages of the present invention:
Fig. 1 is a structural schematic diagram of a multi-processor parallel control system in the prior art;
Fig. 2 is a diagram of structure of the embedded multi-processor parallel control system provided in the embodiments of the present invention;
Fig. 3 is a diagram of the structure of the compilation unit provided in the embodiments of the present invention;
Fig. 4 is a flow diagram of the operating method for the embedded multi-processor parallel control system provided in the embodiments of the present invention;
Fig. 5 is a structural schematic diagram of a specific embedded multi-processor parallel control system provided in the embodiments of the present invention;
Fig. 6 is a flow diagram of the operation of a specific processor provided in the embodiments of the present invention.

### Particular embodiments

Preferable embodiments of the present invention will be described in detail below with reference to the accompanying drawings.

As shown in Fig. 2, the embedded multi-processor parallel control system in the embodiments of the present invention principally comprises a compilation unit 20, an operational support unit 21 and at least two processing units 22, wherein:
the compilation unit 20 is for generating a plurality of automatic control subroutines according to an automatic control program, and compiling each automatic control subroutine into intermediate code;
the operational support unit 21 is for acquiring the intermediate code of each of the automatic control subroutines from the compilation unit 20 and converting the intermediate code of each of the automatic control subroutines to tasks to be run in an embedded operating system, and for identifying each processing unit 22 and sending each of the tasks to the corresponding processing unit 22;
the at least two processing units 22 are for receiving and running the tasks obtained through conversion of the intermediate code of the automatic control subroutines and sent by the operational support unit 21, and for data communication to be carried out amongst the processing units 22 while the tasks corresponding to the automatic control subroutines are running.

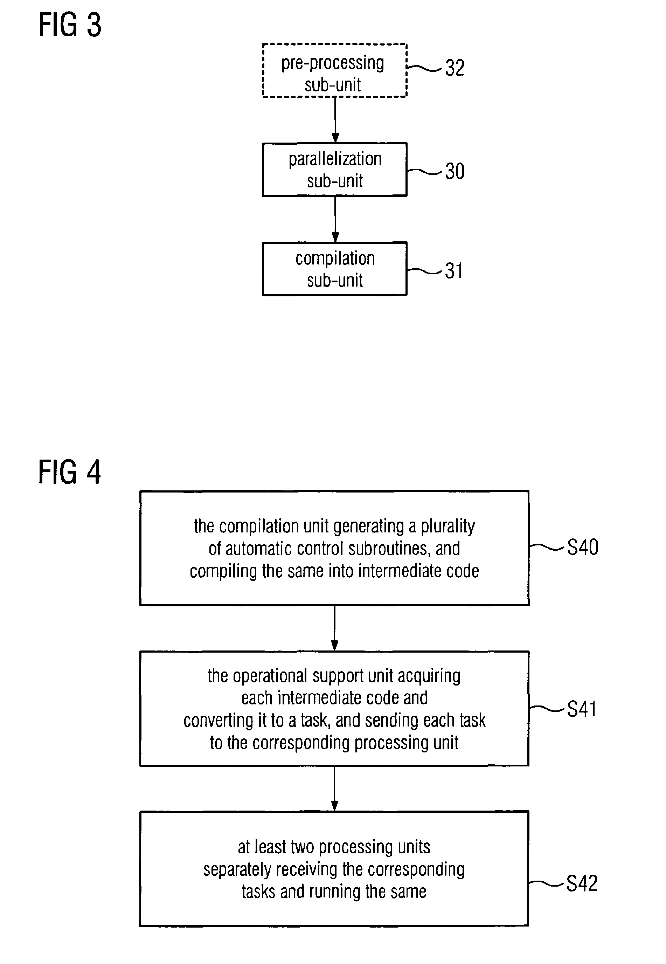

As shown in Fig. 3, the compilation unit 20 principally comprises a parallelization sub-unit 30 and a compilation sub-unit 31, wherein:
the parallelization sub-unit 30 is for dividing the automatic control program into segments and generating a symbol table, syntax tree and control flow graph on the basis of semantic analysis, and generating a plurality of automatic control subroutines after determining the dependence relationships among the automatic control program segments;
the compilation sub-unit 31 is for compiling each automatic control subroutine into intermediate code.

The compilation unit 20 may further comprise a pre-processing sub-unit 32, for outputting the automatic control program into an awl format file.

On the basis of the above system architecture, as shown in Fig. 4, the detailed flow process of the operating method for the embedded multi-processor parallel control system is as follows:
Step S40: the compilation unit generating a plurality of automatic control subroutines according to an automatic control program, and compiling each of the automatic control subroutines into intermediate code.

The automatic control program is at least any one of a structured text language (STL) program, a ladder diagram (LD) language program, and a function block diagram (FBD) language program. These are only examples, and are not intended to limit the present invention; if there are any other engineering languages capable of being used in the embodiments of the present invention in actual applications, they shall also be included in the present invention.

Before the compilation unit generates a plurality of automatic control subroutines according to an automatic control program, the automatic control program is outputted into an awl format file.

In the embodiments of the present invention, the main process by which the compilation unit generates a plurality of automatic control subroutines according to an automatic control program is: the compilation unit divides the automatic control program into segments and generates a symbol table, syntax tree and control flow graph on the basis of semantic analysis, and generates a plurality of automatic control subroutines after determining the dependence relationships among the automatic control program segments.

Step S41: the operational support unit acquiring the intermediate code of each of the automatic control subroutines and converting the intermediate code of each of the automatic control subroutines to tasks to be run in an embedded operating system, and after identifying each processing unit, sending each of the tasks to the corresponding processing unit.

In the embodiments of the present invention, once the operational support unit has identified each processing unit, it sends each task to the corresponding processing unit according to the identity of each processing unit. For example, after separating the various automatic control subroutines, the order of execution of each automatic control subroutine is determined, while correspondingly, the identifier of each processing unit can reflect the order of execution, hence each task can be sent to the corresponding processing unit on the basis of the identifiers of the processing units.

Step S42: at least two processing units separately receiving the tasks sent by the operational support unit which correspond to the automatic control subroutines and running the same, and carrying out data communication with each other during running.

When at least two processing units run the tasks corresponding to the automatic control subroutines, the operational support unit controls at least two processing units to synchronously execute each task obtained through conversion of the intermediate code of each automatic control subroutine.

Preferably, the processing units carry out data communication with each other based on the communication protocol adopted by the operational support unit; the communication protocol adopted by the operational support unit is at least one of network protocol (IP) or data transmission protocol (UDP). These are only examples, and are not intended to limit the present invention; if there are any other communication protocols capable of being used in the embodiments of the present invention in actual applications, they shall also be included in the present invention.

In the embodiments of the present invention, the specific process by which the compilation unit divides the automatic control program into a plurality of automatic control subroutines is as follows:
First, the automatic control program is divided into segments, that is to say, the automatic control program is divided into separate parts to obtain a number of automatic control program segments. In the industrial control standard programming language IEC 61131-3 formulated by the International Electrotechnical Commission (IEC), an automatic control program written using an engineering language is composed of a number of networks; therefore the automatic control program is divided into segments taking a network as the grain size, i.e. each automatic control program segment is one network.

Next, a symbol table and a syntax tree are generated and a control flow graph (CFG) constructed for each automatic control program segment on the basis of semantic analysis.

Next, a parallel model of the automatic control program is established by analysing the dependencies among the automatic control program segments according to the syntax tree, symbol table and control flow graph of the automatic control program; the parallel model of the automatic control program should be capable of clearly showing the relationships among the components included in the automatic control program.

Finally, automatic control program segments represented by syntax tree nodes having close dependency are partitioned as one automatic control subroutine, while automatic control program sections represented by syntax tree nodes having loose dependency are partitioned into different automatic control subroutines.

In the embodiments of the present invention, after analysing the dependence relationships among the various automatic control subroutines, synchronization operations among the various automatic control subroutines can be obtained, including the execution order of the various constituent parts of each automatic control subroutine, and data which require to be synchronized among the various processing units, etc. In this case, the compilation unit can automatically insert the codes for executing these synchronization operations at suitable locations in the corresponding automatic control subroutines.

In the embodiments of the present invention, the operational support unit adopts a lightweight IP protocol stack, while at the same time screening numerous primitives specifed in the MPI protocol, only using the six most basic primitives thereof for reference, in order to identify the processing units, control the execution of the parallel programs (for instance starting and ending), and define synchronization operations, i.e. before inserting synchronization operations in each of the automatic control subroutine sections respectively according to the dependence relationships among the various automatic control subroutine sections, it is necessary to pre-define message passing interface (MPI) primitives for identifying processing units, controlling the execution of parallel programs and defining synchronization operations, including: defining MPI_Send() and MPI_Recv() primitives to accomplish data transfer from one processing unit to another; defining the MPI_Init() primitive to accomplish MPI initialization; defining the MPI_Comm_rank() primitive to determine the label of the invoking process; defining the MPI_Barrier() primitive to block execution until the end of synchronization; and the MPI_Gather() primitive to collect far-end inputs and outputs, and so on.

In the embodiments of the present invention, the intermediate code is similar to the bytecode formed by compiling Java source code, being a universal language format suitable for use in programmable logic controllers (PLC).

The embodiments of the present invention will be described below taking a specific embedded multi-processor parallel processing system as an example.

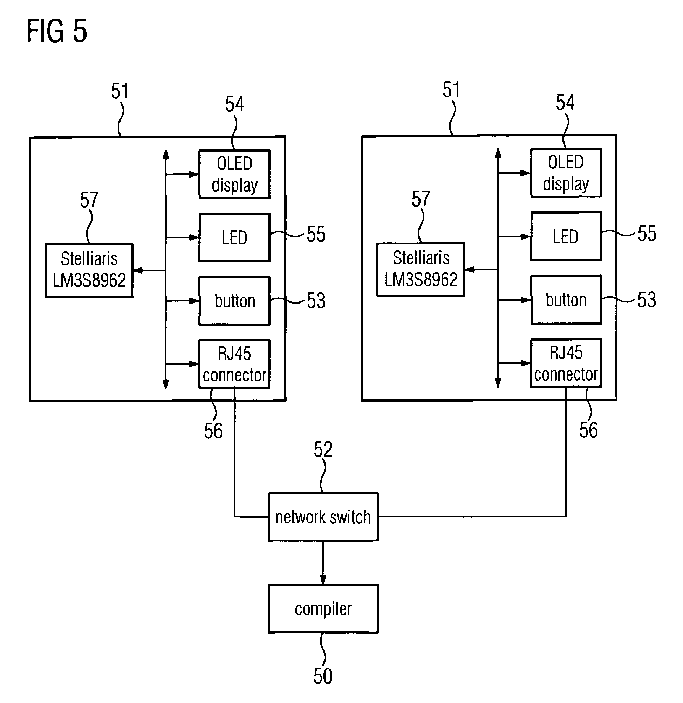

As shown in Fig. 5, the programmable logic controller (PLC) used by the compiler 50 is STEP7 Micro/Win, while the PLC used by the two processors 51 is Stelliaris LM3S8962, the two processors 51 and the compiler 50 being interconnected by way of a network switch 52, wherein:

The compiler 50 is equivalent to the compilation unit in the above embedded multi-processor parallel control system provided by the embodiments of the present invention, each processor 51 is equivalent to each processing unit in the above embedded multi-processor parallel control system provided by the embodiments of the present invention, and the operational support unit in the multi-processor parallel control system provided by the embodiments of the present invention is embedded in the compiler 50 and each processor 51.

The specific operating method of the system shown in Fig. 5 is as follows:

First, the compiler 50 outputs a control program (i.e. source file) written in STL into an awl format file, and based on this awl file divides the STL control program into a plurality of STL control subroutines, with one or more control subroutines corresponding to one processor 51, and compiles each STL control subroutine into PLC intermediate code.

Next, the PLC intermediate code obtained by compiling each STL control subroutine is converted to a task (binary file) to be run in an embedded operating system and sent to the corresponding controller 51; alternatively, the PLC intermediate code is sent to the corresponding processor 51, and converted by the processor 51 to the corresponding task.

Finally, the two processors 51 simultaneously execute the obtained tasks corresponding to the STL control subroutines, the two processors 51 carrying out data interaction via a network during execution.

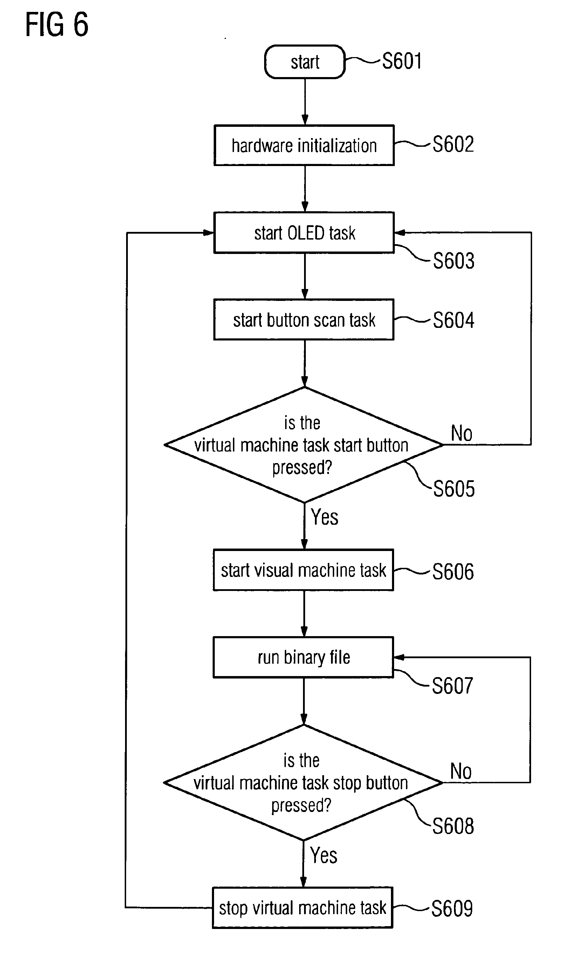

When a button 53, organic light-emitting diode (OLED) 54, light-emitting diode (LED) 55 and RJ45 network connector 56 are provided on the test board on which each processor 51 is located and connected to the Stelliaris LM3S8962 (PLC) 57 via a bus, the operational support unit embedded in the processor 51 is equivalent to a virtual machine; as shown in Fig. 6, the operating process of the test board on which each processor is located is as follows:
Step S601: the test board is started;
Step S602: hardware initialization is carried out;
Step S603: start the OLED task;
Step S604: start a button scan task;
Step S605: judge whether or not the start button for the virtual machine task is pressed; if it is not pressed, then return to step S603 to re-start the OLED task, if it is pressed, then perform step S606;
Step S606: start the virtual machine task;
Step S607: on the basis of the virtual machine task, execute the binary file obtained through conversion of the corresponding universal PLC intermediate code;
Step S608: judge whether or not the stop button for the virtual machine task is pressed; if it is not pressed, then return to step S607 to cyclically execute the binary file obtained through conversion of the corresponding universal PLC intermediate code, if it is pressed, then perform step S609;
Step S609: stop the virtual machine task, and return to step S603 to re-start the OLED task.

Although embodiments of the present invention have been set forth and described, those skilled in the art can appreciate that a variety of changes, amendments, substitutions and alterations can be made to these embodiments without departing from the principles and aims of the present invention; the scope of the present invention is defined by the claims and the equivalents thereof.

## Claims

1. An embedded multi-processor parallel processing system, **characterized in that** it comprises:
a compilation unit, for generating a plurality of automatic control subroutines according to an automatic control program, and compiling each of the automatic control subroutines into intermediate code;
an operational support unit, for acquiring the intermediate code of each of the automatic control subroutines from the compilation unit and converting the intermediate code of each of the automatic control subroutines to tasks to be run in an embedded operating system, and for identifying each processing unit and sending each of the tasks to the corresponding processing unit;
at least two processing units, for receiving and running the tasks obtained through conversion of the intermediate code of the automatic control subroutines and sent by the operational support unit, and capable of carrying out data communication with each other while running the tasks corresponding to the automatic control subroutines.

2. The system as claimed in claim 1, **characterized in that** the operational support unit is further used to control the at least two processing units to synchronously execute each of the tasks obtained through conversion of the intermediate code of each of the automatic control subroutines.

3. The system as claimed in claim 1, **characterized in that** the automatic control program processed by the compilation unit is at least any one of a structured text language program, a ladder diagram language program, and a function block diagram language program.

4. The system as claimed in claim 1, **characterized in that** the operational support unit is used to carry out data communication based on the communication protocol adopted by the operational support unit when at least two processing units are running the tasks corresponding to the automatic control subroutines;
the communication protocol adopted by the operational support unit comprises at least one of network protocol or data transmission protocol.

5. The system as claimed in any one of claims 1 - 4, **characterized in that** the compilation unit comprises a parallelization sub-unit and a compilation sub-unit, wherein:
the parallelization sub-unit is for dividing the automatic control program into segments and generating a symbol table, syntax tree and control flow graph on the basis of semantic analysis, and generating a plurality of the automatic control subroutines after determining the dependence relationships among the automatic control program segments;
the compilation sub-unit is for compiling each of the automatic control subroutines into the intermediate code.

6. The system as claimed in claim 5, **characterized in that** the compilation unit further comprises a pre-processing sub-unit, for outputting the automatic control program into an awl format file.

7. An operating method for an embedded multi-processor parallel control system, **characterized in that** it comprises:
a compilation unit generating a plurality of automatic control subroutines according to an automatic control program, and compiling each of the automatic control subroutines into intermediate code;
an operational support unit acquiring the intermediate code of each of the automatic control subroutines and converting the intermediate code of each of the automatic control subroutines to tasks to be run in an embedded operating system, and after identifying each processing unit, sending each of the tasks to the corresponding processing unit;
at least two processing units separately receiving the tasks sent by the operational support unit which correspond to the automatic control subroutines and running the same, and carrying out data communication with each other during running.

8. The method as claimed in claim 7, **characterized in that** when the at least two processing units run the tasks corresponding to the automatic control subroutines, the operational support unit controls the at least two processing units to synchronously execute each of the tasks obtained through conversion of the intermediate code of each of the automatic control subroutines.

9. The method as claimed in claim 7, **characterized in that** the automatic control program is at least any one of a structured text language program, a ladder diagram language program, and a function block diagram language program.

10. The method as claimed in claim 7, **characterized in that** the processing units carry out data communication with each other based on the communication protocol adopted by the operational support unit;
the communication protocol adopted by the operational support unit comprises at least one of network protocol or data transmission protocol.

11. The method as claimed in any one of claims 7 - 10, **characterized in that** the step of generating a plurality of the automatic control subroutines according to the automatic control program comprises:
dividing the automatic control program into segments and generating a symbol table, syntax tree and control flow graph on the basis of semantic analysis, and generating a plurality of the automatic control subroutines after determining the dependence relationships among the automatic control program segments.

12. The method as claimed in claim 11, **characterized in that** before a plurality of the automatic control subroutines are generated according to the automatic control program, the automatic control program is outputted into an awl format file.
